# FASCICULE DE BREVET EUROPEEN

(11) **EP 0 783 209 B1**
(45) Date de publication et mention de la délivrance du brevet: **13.04.2005**
(21) Numéro de dépôt: 96402894.8
(22) Date de dépôt: 26.12.1996
(51) Int. Cl.: H04B 1/40, H04R 5/02

(54) **Procédé et dispositif de transmission sans fil**
Verfahren und Vorrichtung zur drahtloser Übertragung
Method and apparatus for wireless transmission

(30) Priorité: 29.12.1995 FR 9515742
(43) Date de publication de la demande: 09.07.1997
(73) Titulaire: THOMSON multimedia, 92648 Boulogne Cédex (FR)
(72) Inventeur: Howson, Christopher, 92050 Paris la Defense Cedex (FR); Harrison, David, 92050 Paris la Defense Cedex (FR); Louzir, Ali, 92050 Paris la Defense Cedex (FR)
(74) Mandataire: Ruellan-Lemonnier, Brigitte

(56) Documents cités:
- EP-A- 0 432 052
- EP-A- 0 471 477
- US-A- 4 349 842

## Description

La présente invention concerne un procédé et un dispositif de transmission sans fil d'un signal S₁ entre un émetteur et au moins un récepteur.

L'invention se rapporte particulièrement à un procédé et à un dispositif de transmission sans fil d'un signal audio entre un appareil de télévision et au moins deux haut-parleurs situés à distance dudit appareil de télévision.

Les procédés de transmission sans fil connus sont basés sur une modulation d'une porteuse dont la fréquence est située dans la gamme infrarouge (IR). Les ondes représentant les signaux IR ont une propagation mono-directionnelle et subissent de ce fait des interruptions dues aux obstacles susceptibles de se trouver entre l'émetteur et le récepteur. En outre, pour obtenir une bonne transmission dans cette gamme de fréquence, l'émetteur et le(s) récepteur(s) doivent être très bien alignés. Par conséquent l'utilisation des porteuses de fréquences IR est incompatible avec des environnements, tels qu'une salle de télévision par exemple, dans laquelle, pour obtenir une bonne répartition sonore, les haut-parleurs doivent être situés symétriquement sur des diagonales et à distance de l'appareil de télévision comme cela est schématisé à la figure 1. Le document EP-A-0 432 052 présente un modulateur AM et FM pour signaux télévisivés.

Un autre inconvénient des procédés utilisant une porteuse IR provient de la sensibilité des signaux IR à la lumière ambiante. Par ailleurs, ce type de transmission nécessite l'utilisation de diodes électroluminescentes (LED) de grande sensibilité qui, outre leur prix élevé, se caractérisent par une importante consommation de puissance.

Le but de l'invention est de pallier les inconvénients des procédés de l'art antérieur au moyen d'un procédé de transmission sans fil. Selon le procédé de l'invention, à l'émission :
- on module en fréquence une première porteuse S₂ de fréquence F2, située dans la gamme VHF (very high frequency en langue anglaise), par le signal S₁ à transmettre puis,
- on module en amplitude une deuxième porteuse S₃ de fréquence F3, située dans la gamme de fréquence SHF (super high frequency en langue anglaise), par un signal modulant S₂ₘ résultant de la modulation en fréquence de la porteuse S₂, de manière à transmettre au récepteur un signal S₃ₘ modulé en amplitude,
et à la réception :
- on effectue une démodulation d'amplitude du signal S₃ₘ de manière à récupérer le signal S₂ₘ, puis,
- on effectue une démodulation de fréquence du signal S₂ₘ de manière à récupérer le signal S₁.

L'utilisation des porteuses S₂ et S₃ dont les fréquences sont situées respectivement dans les bandes VHF et SHF permet, d'une part, de s'affranchir des perturbations provoquées par la lumière ambiante affectant les signaux IR, et d'autre part, d'augmenter la probabilité de réaliser une liaison entre l'émetteur et le récepteur dans la mesure où les signaux SHF se propagent selon une pluralité de trajets distincts. La probabilité pour que lesdits trajets soient obstrués simultanément étant très faible et de ce fait, le signal S₃ₘ peut atteindre le récepteur par un ou plusieurs trajets non obstrués. En plus, la propagation à travers les murs d'un signal SHF est très faible par rapport aux fréquences plus basses, ce qui minimise le risque d'interférences entre utilisateurs.

Un autre avantage du procédé selon l'invention provient de la mise en oeuvre d'une double modulation FM-AM permettant une simplification notable du récepteur. En effet, le recouvrement du signal S₃ₘ est effectué par une démodulation d'amplitude classique nécessitant des composants peu onéreux. En outre, l'émission d'un signal SHF, selon le procédé de l'invention, requiert un oscillateur local ayant une stabilité fréquentielle relativement modeste et par conséquent peu onéreux, comparativement à la stabilité requise, aussi bien à l'émission qu'à la réception, par les oscillateurs utilisés dans un système à modulation de fréquence classique.

Le procédé selon l'invention est mis en oeuvre au moyen d'un dispositif de transmission sans fil entre un émetteur et un récepteur. L' émetteur comporte trois étages montés en cascade, soit un premier étage d'amplification/filtrage du signal S₁, un deuxième étage de modulation de fréquence de la porteuse S₂ et un troisième étage de modulation d'amplitude de la porteuse S₃, tandis que le récepteur comporte trois étages montés en cascade, soit un premier étage de démodulation d'amplitude du signal S₃ₘ, un deuxième étage de démodulation de fréquence du signal S₂ₘ et un troisième étage d'amplification/filtrage du signal S₁ reçu.

D'autres caractéristiques et avantages de l'invention ressortiront de la description qui va suivre, prise à titre d'exemple non limitatif, en référence aux figures annexées dans lesquelles :
la figure 1 représente schématiquement un exemple d'environnement d'utilisation du procédé selon l'invention;

- la figure 2 représente schématiquement un émetteur permettant de mettre en oeuvre un procédé selon l'invention;
- la figure 3a et la figure 3b représentent un spectre d'un signal S₁ transmis conformément au procédé selon l'invention;
- la figure 4a et la figure 4b représentent un spectre d'un signal S₂ₘ résultant de la modulation en fréquence d'une porteuse S₂ par le signal S₁ ;
- la figure 5a et la figure 5b représentent un spectre d'un signal S₃ₘ résultant de la modulation en amplitude d'une porteuse S₃ par le signal S₂ₘ;
- la figure 6 représente schématiquement un récepteur FM-AM permettant de mettre en oeuvre un procédé selon l'invention.

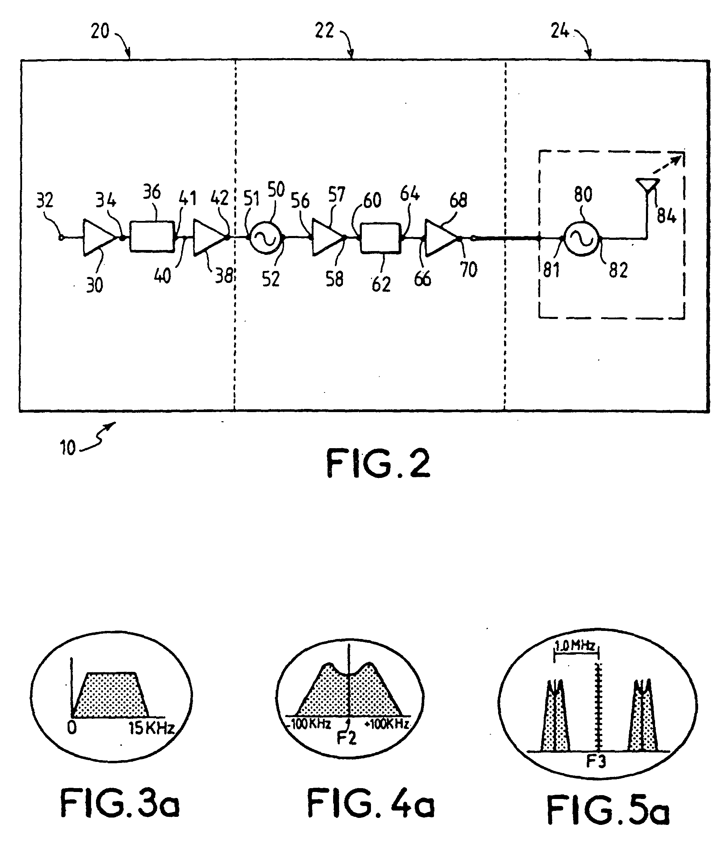

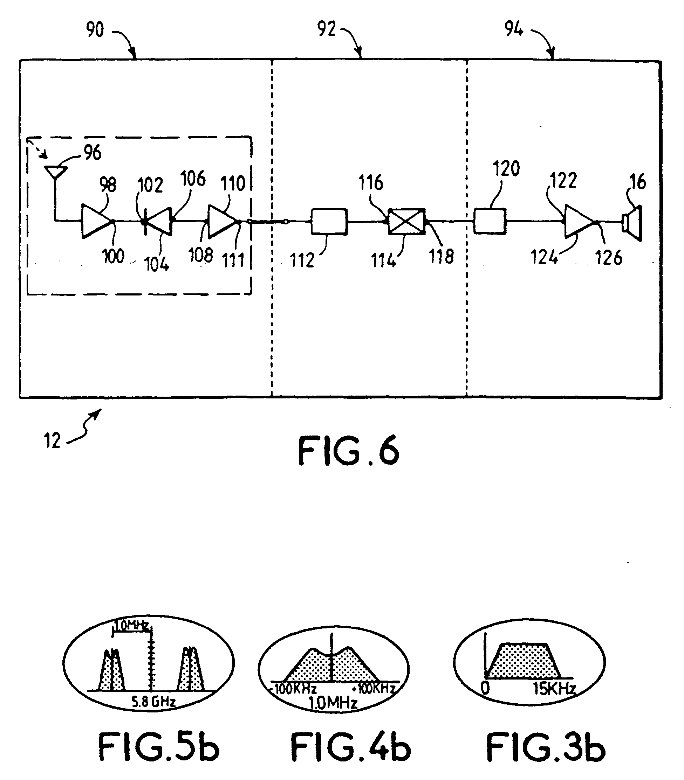

Sur les figures 3a et 3b est représenté un spectre d'un signal S₁ destiné à être transmis entre un émetteur 10 et un récepteur 12 selon le procédé de l'invention dans lequel, à l'émission :
- on module en fréquence une première porteuse S₂ de fréquence F2, située dans la gamme VHF, par le signal S₁ à transmettre puis,
- on module en amplitude une deuxième porteuse S₃ de fréquence F3, située dans la gamme de fréquence SHF, par un signal modulant S₂ₘ résultant de la modulation en fréquence de la porteuse S₂ , de manière à transmettre au récepteur 12 un signal S₃ₘ modulé en amplitude, et,
à la réception:
- on effectue une démodulation d'amplitude du signal S₃ₘ de manière à récupérer le signal S₂ₘ, puis,
- on effectue une démodulation de fréquence du signal S₂ₘ de manière à récupérer le signal S₁.

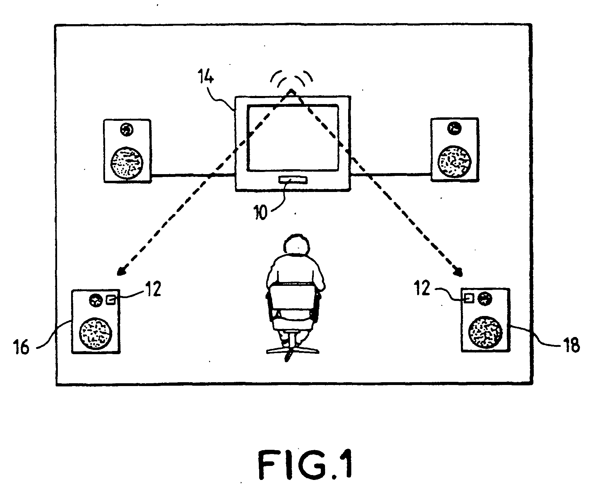

Dans l'exemple d'application du procédé selon l'invention, illustré par la figure 1, on module une porteuse S₂ de fréquence 1 MHz par un signal audio S₁ envoyé par un appareil de télévision 14 à deux haut-parleurs 16 et 18 situés à distance dudit appareil de télévision 14. Comme on peut le voir sur les figures 4a et 4b, la modulation de fréquence de la porteuse S₂ par le signal S₁ permet d'obtenir une excursion maximum de fréquence ΔF de ± 100 KHz, autour de la fréquence F₂. L' excursion de fréquence ΔF étant proportionnelle à l'amplitude du signal S₁, il en résulte que le réglage du niveau sonore des haut-parleurs 16 et 18, s'obtient par le réglage de ladite excursion de fréquence ΔF. Avec un tel procédé, il est inutile d'utiliser un canal supplémentaire pour contrôler le niveau sonore des haut-parleurs.

Selon un mode de réalisation préféré du procédé de l'invention, la porteuse S₃ a une fréquence F3 égale à 5,8 GHz. Le spectre du signal S₃ₘ, obtenu par la modulation d'amplitude de la porteuse S₃ et représenté par les figures 5a et 5b, comporte une raie centrale représentant la fréquence F₃, et deux bandes latérales, représentant le signal modulant S_{2m,}, centrées sur la fréquence F2.

Le procédé selon l'invention est mis en oeuvre par un dispositif de transmission sans fil comportant l'émetteur 10 et le récepteur 12 représenté schématiquement respectivement par les figures 2 et 6. Comme on peut le voir sur la figure 2, l'émetteur 10 comporte trois étages montés en cascade, soit un premier étage 20 d'amplification/filtrage du signal S₁ à transmettre, un deuxième étage 22 de modulation de fréquence de la porteuse S₂ et un troisième étage 24 de modulation d'amplitude de la porteuse S₃.

Dans l'exemple d'application particulier, illustré par la figure 1, l'étage 20 comporte un premier amplificateur audio 30 dont une entrée 32 reçoit le signal S₁ et dont une sortie 34 est reliée à un premier moyen de filtrage 36, un deuxième amplificateur audio 38 dont une entrée 40 reçoit, du moyen de filtrage 36, le signal S₁ préamplifié et filtré et dont une sortie 42 est reliée à l'étage de modulation de fréquence 22. Ledit étage de modulation de fréquence 22 comporte un oscillateur RF (radiofréquence) 50 commandé en tension (VCO) destiné à générer le signal S₂ et dont une entrée 44 reçoit le signal S₁, tandis qu'une sortie 52 délivre le signal S₂ₘ résultant de la modulation de fréquence dudit signal S₂ par le signal S₁, à un premier amplificateur RF 54, une sorite 58 dudit premier amplificateur RF 54 est reliée à une entrée 60 d'un deuxième moyen de filtrage 62 dont une sortie 64 est reliée à une entrée 66 d'un deuxième amplificateur RF 68. Une sortie 70 dudit deuxième amplificateur RF 68 est reliée à l'étage de modulation d'amplitude 24.

Ledit étage de modulation d'amplitude 24 comporte un oscillateur SHF (super high frequency) 80 destiné à générer la porteuse S₃ et délivrant à une sortie 82 le signal S₃ₘ résultant de la modulation d'amplitude de ladite porteuse S₃ par le signal S₂ₘ. La sortie 82 dudit oscillateur SHF 80 est reliée à une antenne 84 destinée à émettre le signal S₃ₘ vers le récepteur 12.

Selon un mode de réalisation préféré de l'invention, le récepteur 12, représenté à la figure 6, comporte trois étages montés en cascade, soit un premier étage 90 de démodulation d'amplitude du signal S₃ₘ, un deuxième étage 92 de démodulation de fréquence du signal S₂ₘ, et un troisième étage 94 d'amplification/filtrage du signal S₁ reçu.

L'étage 90 comporte une antenne 96 de réception du signal S₂ₘ reliée à un moyen de préamplification 98 dont une sortie 100 est reliée à une première borne 102 d'un détecteur AM 104; une deuxième borne 106 dudit détecteur AM 104 est reliée à une entrée 108 d'un moyen d'amplification 110 à impédance élevée dont une sortie est reliée à l'étage 92. Ledit étage 92 comporte un troisième moyen de filtrage 112, relié à une entrée 116 d' un démodulateur de fréquence 114 dont une sortie 118 délivre le signal S₁ à l'étage 94.

L'étage 94 comporte un quatrième moyen de filtrage 120 relié à une entrée 122 d'un troisième amplificateur audio 124 dont un sortie 126 est reliée à un haut-parleur 16.

Ainsi, après filtrage et amplification dans l'étage 20, le signal à transmettre S₁ est appliqué à l'entrée 44 de l'oscillateur RF 50 de manière à moduler en fréquence la porteuse S₂ générée par ledit oscillateur RF 50. Le signal S₂ₘ obtenu est ensuite amplifié et filtré, puis appliqué à l'entrée de l'oscillateur SHF 80 de manière à moduler en amplitude la porteuse S₃ générée par ledit oscillateur 80. Le signal S₃ₘ obtenu est ensuite émis par l'antenne 84 vers l'antenne 96. A la réception, le signal S₃ₘ est préamplifié par le préamplificateur 98 puis appliqué au détecteur AM 104 de manière à récupérer le signal modulant S₂ₘ dont le spectre est représenté à la figure 4b.

Le signal S₂ₘ est ensuite appliqué à un démodulateur de fréquence 144, via le moyen de filtrage 112. Ledit démodulateur 114 délivre à sa sortie 118 le signal S₁ qui est ensuite envoyé au haut-parleur 16 via le moyen de filtrage 120.

Grâce au procédé et au dispositif selon l'invention, le signal transmis est immunisé contre les perturbations telles que la lumière ambiante et les obstacles susceptibles de provoquer des interruptions de la liaison émetteur-récepteurs. En outre, du fait de l'utilisation d'une modulation d'amplitude de la porteuse SHF, la structure du récepteur utilisé est notablement simplifiée.

## Revendications

1. Procédé de transmission sans fil d'un signal exclusivement audio S₁ entre appareil de télévision (14) incluant un émetteur (10) et des haut-parleurs (16, 18) situés à distance dudit appareil de télévision (14), les haut-parleurs (16,18) incluant un récepteur (12), **caractérisé en ce qu'**à l'émission :
- on module en fréquence une première porteuse S₂, de fréquence F₂, située dans la gamme VHF, par le signal audio S₁ à transmettre, puis
- on module en amplitude une deuxième porteuse S₃ de fréquence F₃, située dans la gamme SHF, par un signal modulant S₂ₘ résultant de la modulation de fréquence de la porteuse S₂ de manière à transmettre au récepteur (12) un signal S₃ₘ modulé en amplitude, et, à la réception :
- on effectue une démodulation d'amplitude du signal S₃ₘ de manière à récupérer le signal S₂ₘ, puis,
- on effectue une démodulation de fréquence du signal S₂ₘ de manière à récupérer le signal audio S₁.

2. Procédé selon la revendication 1, **caractérisé en ce que** l'on module en fréquence une porteuse S₂ de fréquence F₂ égale à 1 MHz par le signal audio S₁ de manière à obtenir une excursion maximum de fréquence ΔF égale à ± 100 KHz autour de la fréquence F₂.

3. Procédé selon l'une des revendications 1 ou 2, **caractérisé en ce que** l'on module en amplitude une porteuse S₃ de fréquence F₃ égale à 5,8 GHz.

4. Procédé selon la revendication 2, **caractérisé en ce que** l'on règle l'excursion en fréquence ΔF de manière à commander le niveau sonore des haut-parteurs (16, 18).

5. Dispositif de transmission sans fil d'un signal exclusivement audio S₁ entre un appareil de télévision (14) comportant un émetteur (10) et des haut-parleurs (16, 18) situés à distance dudit appareil de télévision (14), les haut-parleurs (16,18) incluant un récepteur (12) et utilisant le procédé selon les revendications 1 à 4, ledit émetteur (10) comportant trois étages montés en cascade, soit une premier étage (20) d'amplification/filtrage du signal S₁, un deuxième étage (22) de modulation de fréquence de la porteuse S₂ et un troisième étage (24) de modulation d'amplitude de la porteuse S₃.

6. Dispositif selon la revendication 5, **caractérisé en ce que** l'étage (20) comporte un premier amplificateur audio (30) relié à un deuxième amplificateur audio (38) via un premier moyen de filtrage (36).

7. Dispositif selon la revendication 5, **caractérisé en ce que** l'étage (22) comporte un oscillateur RF (50) commandé en tension (VCO) destiné à générer la porteuse S₂, un premier amplificateur RF (54) relié à un deuxième amplificateur RF (68) via un deuxième moyen de filtrage (62).

8. Dispositif selon la revendication 5, **caractérisé en ce que** l'étage (24) comporte un oscillateur SHF (80) destiné à générer la porteuse S₃ et relié à une antenne (84) destinée à émettre le signal S₃ₘ vers le récepteur (12).

9. Dispositif de transmission sans fil d'un signal exclusivement audio S1 entre un appareil de télévision (14) comportant un émetteur (10) et des haut-parleurs (16, 18) situés à distance dudit appareil de télévision (14), les haut-parleurs (16, 18) incluant un récepteur (12) et utilisant le procédé selon les revendications 1 à 4, le récepteur (12) comportant trois étages montés en cascade, soit un premier étage (90) de démodulation d'amplitude du signal S₃ₘ, un deuxième étage 92 de démodulation de fréquence du signal S₂ₘ et un troisième étage (94) d'amplification/filtrage du signal S₁ reçu.

10. Dispositif selon l'une des revendications 5 à 8, **caractérisé en ce que** le récepteur (12) comporte trois étages montés en cascade, soit un premier étage (90) de démodulation d'amplitude du signal S₃ₘ, un deuxième étage 92 de démodulation de fréquence du signal S₂ₘ et un troisième étage (94) d'amplification/filtrage du signal S₁ reçu.

11. Dispositif selon la revendication 9 ou 10, **caractérisé en ce que** l'étage (90) comporte une antenne (96) de réception reliée à un détecteur AM (104) via un moyen de préamplification (98).

12. Dispositif selon la revendication 9 ou 10, **caractérisé en ce que** l'étage (92) comporte un troisième moyen de filtrage (112) relié à un démodulateur de fréquence (114).

13. Dispositif selon la revendication 9 ou 10, **caractérisé en ce que** l'étage (94) comporte un quatrième moyen de filtrage (120) relié en troisième amplificateur audio (124).

## Patentansprüche

1. Verfahren zur drahtlosen Übertragung eines Audiosignals S₁ zwischen einem Fernsehgerät (14) mit einem Sender (10) und Lautsprechern (16, 18), die in einem Abstand von dem Fernsehgerät (14) stehen, wobei die Lautsprecher (16, 18) einen Empfänger (12) enthalten,
**dadurch gekennzeichnet, dass**
bei der Sendung folgendes erfolgt:
- Frequenzmodulation eines ersten Trägers S₂ mit der Frequenz F₂ im VHF-Bereich durch das zu übertragende Audiosignal S₁, dann
- Amplitudenmodulation eines zweiten Trägers S₃ mit der Frequenz F₃ im SHF-Bereich durch ein modulierendes Signal S₂ₘ, resultierend aus der Frequenzmodulation des Trägers S₂ derart, dass zu dem Empfänger (12) ein in der Amplitude moduliertes Signal S₃ₘ übertragen wird, und beim Empfang
- eine Amplitudendemodulation des Signals S₃ₘ derart, dass das Signal S₂ₘ zurückgewonnen wird, dann
- eine Frequenzdemodulation des Signals S₂ₘ derart, dass das Audiosignal S₁ zurückgewonnen wird.

2. Verfahren nach Anspruch 1, **gekennzeichnet durch** eine Frequenzmodulation eines Trägers S₂ mit der Frequenz F₂ gleich 1 MHz **durch** das Audiosignal S₁, derart, dass ein maximaler Frequenzhub Δf gleich ±100 KHz um die Frequenz F₂ gebildet wird.

3. Verfahren nach einem der Ansprüche 1 oder 2, **gekennzeichnet durch** eine Amplitudenmodulation eines Trägers S₃ mit der Frequenz F₃ gleich 5,8 GHz.

4. Verfahren nach Anspruch 2, **gekennzeichnet durch** eine Regelung des Frequenzhubs Δf derart, dass die Lautstärke der Lautsprecher (16, 18) gesteuert wird.

5. Vorrichtung zur drahtlosen Übertragung eines Audiosignals S₁ zwischen einem Fernsehgerät (14) mit einem Sender (10) und Lautsprechern (16, 18), die in einem Abstand von dem Fernsehgerät (14) stehen, wobei die Lautsprecher (16, 18) einen Empfänger (12) enthalten und das Verfahren gemäß den Ansprüchen 1 bis 4 anwenden, dass der Sender (10) drei in Kaskade geschaltete Stufen enthält, nämlich eine erste Stufe (20) zur Verstärkung/Filterung des Signals S₁, eine zweite Stufe (22) zur Frequenzmodulation des Trägers S₂ und eine dritte Stufe (24) zur Amplitudenmodulation des Trägers S₃.

6. Vorrichtung nach Anspruch 5, **dadurch gekennzeichnet, dass** die Stufe (20) einen ersten Audioverstärker (30) enthält, der über erste Filtermittel (36) mit einem zweiten Audioverstärker (38) verbunden ist.

7. Vorrichtung nach Anspruch 5, **dadurch gekennzeichnet, dass** die Stufe (22) einen zur Erzeugung des Trägers S₂ dienenden, durch eine Spannung (VCO) gesteuerten HF-Oszillator (50), und einen ersten HF-Verstärker (54) enthält, der über zweite Filtermittel (62) mit einem zweiten HF-Verstärker (68) verbunden ist.

8. Vorrichtung nach Anspruch 5, **dadurch gekennzeichnet, dass** die Stufe (24) einen SHF-Oszillator (80) enthält zur Erzeugung des Trägers S₃, und verbunden mit einer Antenne (84) zur Sendung des Signals S₃ₘ zu dem Empfänger (12).

9. Vorrichtung zur drahtlosen Übertragung eines Audiosignals S₁ zwischen einem Fernsehgerät (14) mit einem Sender (10) und Lautsprechern (16, 18), die in einem Abstand zu dem Fernsehgerät (14) stehen, wobei die Lautsprecher (16, 18) einen Empfänger (12) enthalten und das Verfahren nach den Ansprüchen 1 bis 4 benutzen, und der Empfänger drei in Kaskade geschaltete Stufen enthält, nämlich eine erste Stufe (90) zur Amplitudendemodulation des Signals S₃ₘ, eine zweite Stufe (92) zur Frequenzdemodulation des Signals S₂ₘ und eine dritte Stufe (94) zur Verstärkung/Filterung des empfangenen Signals S₁.

10. Vorrichtung nach einem der Ansprüche 5 bis 8, **dadurch gekennzeichnet, dass** der Empfänger (12) drei in Kaskade geschaltete Stufen enthält, nämlich eine erste Stufe (90) zur Amplitudendemodulation des Signals S₃ₘ, eine zweite Stufe (92) zur Frequenzdemodulation des Signals S₂ₘ und eine dritte Stufe (94) zur Verstärkung/Filterung des empfangenen Signals S₁.

11. Vorrichtung nach Anspruch 9 oder 10, **dadurch gekennzeichnet, dass** die Stufe (90) eine Empfangsantenne (96) enthält, die über Vorverstärkungsmittel (98) mit einem AM-Detektor (104) verbunden ist.

12. Vorrichtung nach Anspruch 9 oder 10, **dadurch gekennzeichnet, dass** die Stufe (92) dritte Filtermittel (112) enthält, die mit einem Frequenzdemodulator (114) verbunden sind.

13. Vorrichtung nach Anspruch 8 oder 10, **dadurch gekennzeichnet, dass** die Stufe (94) vierte Filtermittel (120) enthält, die mit einem dritten Audioverstärker (124) verbunden sind.

## Claims

1. Process for the wireless transmission of an only audio signal S₁ between television set (14) including a transmitter (10) and the loudspeakers (16,18) placed apart from said television set (14), said loudspeakers (16,18) including a receiver (12),
**characterized in that** at the sending end:
- a first carrier S₂, of frequency F₂, situated in the VHF range, is frequency-modulated by the audio signal S₁ to be transmitted, and then
- a second carrier S₃ of frequency F₃, situated in the SHF range, is amplitude-modulated by a modulating signal S₂ₘ resulting from the frequency modulation of the carrier S₂ so as to transmit an amplitude-modulated signal S₃ₘ to the receiver (12), and
at the receiving end:
- amplitude demodulation of the signal S₃ₘ is performed so as to recover the signal S₂ₘ, and then
- frequency demodulation of the signal S₂ₘ is performed so as to recover the signal S₁.

2. Process according to Claim 1, **characterized in that** a carrier S₂ of frequency F₂ equal to 1 MHz is frequency-modulated by the audio signal S₁ so as to obtain a maximum frequency excursion ΔF equal to ± 100 KHz about the frequency F₂.

3. Process according to one of Claims 1 or 2, **characterized in that** a carrier S₃ of frequency F₃ equal to 5.8 GHz is amplitude-modulated.

4. Process according to Claim 2, **characterized in that** the frequency excursion ΔF is adjusted so as to control the sound level of the loudspeakers (16, 18).

5. Device for the wireless transmission of an audio signal S₁ between a television set (14) including a transmitter (10) and loudspeakers (16,18) placed apart from said television set (14), said loudspeakers (16,18) including a receiver (12) and using the process according to Claims 1 to 4, the said transmitter (10) including three stages mounted in cascade, namely a first stage (20) for amplification/filtering of the signal S₁, a second stage (22) for frequency modulation of the carrier S₂ and a third stage (24) for amplitude modulation of the carrier S₃.

6. Device according to Claim 5, **characterized in that** the stage (20) includes a first audio amplifier (30) linked to a second audio amplifier (38) via a first filtering means (36).

7. Device according to Claim 5, **characterized in that** the stage (22) includes a voltage-controlled RF oscillator (VCO) (50) intended to generate the carrier S₂, a first RF amplifier (54) linked to a second RF amplifier (68) via a second filtering means (62).

8. Device according to Claim 5, **characterized in that** the stage (24) includes an SHF oscillator (80) intended to generate the carrier S₃ and linked to an antenna (84) intended to send the signal S₃ₘ to the receiver (12).

9. Device for the wireless transmission of an audio signal S₁ between a television set (14) comprising a transmitter (10) and the loudspeakers (16,18) placed apart from said television set (14), said loudspeakers (16,18) including a receiver (12) and using the process according to Claims 1 to 4, the receiver (12) including three stages mounted in cascade, namely a first stage (90) for amplitude demodulation of the signal S₃ₘ, a second stage (92) for frequency demodulation of the signal S₂ₘ and a third stage (94) for amplification/filtering of the signal S₁ received.

10. Device according to one of Claims 5 to 8, **characterized in that** the receiver (12) includes three stages mounted in cascade, namely a first stage (90) for amplitude demodulation of the signal S₃ₘ, a second stage (92) for frequency demodulation of the signal S₂ₘ and a third stage (94) for amplification/filtering of the signal S₁ received.

11. Device according to Claim 9 or 10, **characterized in that** the stage (90) includes a receiving antenna (96) linked to an AM detector (104) via a preamplification means (98).

12. Device according to Claim 9 or 10, **characterized in that** the stage (92) includes a third filtering means (112) linked to a frequency demodulator (114).

13. Device according to Claim 9 or 10, **characterized in that** the stage (94) includes a fourth filtering means (120) linked up to a third audio amplifier (124).
